Europäisches Patentamt

European Patent Office

Office européen des brevets

(11) EP 0 479 383 B1

(19)

(12) **FASCICULE DE BREVET EUROPEEN**

(45) Date de publication et mention
de la délivrance du brevet:
**07.01.1998 Bulletin 1998/02**

(51) Int Cl.⁶: **G06T 5/00**

(21) Numéro de dépôt: **91202545.9**

(22) Date de dépôt: **01.10.1991**

(54) **Dispositif de segmentation binaire en temps réel d'images numérisées**

Anordnung zur Echtzeitsegmentierung von numerischen Bildern

Apparatus for real-time binary segmentation of digital images

(84) Etats contractants désignés:
**DE FR GB**

(30) Priorité: **02.10.1990 FR 9012110**

(43) Date de publication de la demande:
**08.04.1992 Bulletin 1992/15**

(73) Titulaires:
• **LABORATOIRES D'ELECTRONIQUE PHILIPS
S.A.S.
94450 Limeil-Brévannes (FR)**
Etats contractants désignés:
**FR**
• **Philips Electronics N.V.
5621 BA Eindhoven (NL)**
Etats contractants désignés:
**DE GB**

(72) Inventeur: **Florent, Raoul
F-75008 Paris (FR)**

(74) Mandataire: **Landousy, Christian et al
Société Civile S.P.I.D.
156, Boulevard Haussmann
75008 Paris (FR)**

(56) Documents cités:
• **PATTERN RECOGNITION LETTERS vol. 11, no.
1, Janvier 1990, pages 13 - 23;
KARSSEMEIJER, NICO: 'A Relaxation Method for
Image Segmentation using a Spatially
Dependent Stochastic Model.'**
• **4èME CONGRES RECONNAISSANCE DES
FORMES ET INTELLIGENCE ARTIFICIELLE,
PARIS, 25- 27 JANVIER 1984 vol. I, pages 51 - 69;
J.M. CHASSERY ET AL: 'Segmentation d'images
cytologiques-étude de méthodes'**

## Description

L'invention concerne une méthode de segmentation binaire pour délimiter un objet appelé cible du fond dans une image en forme de matrice bidimensionnelle de pixels ($I_{ij}$) numérisés, fondée sur la relaxation par la règle du produit ($\Pi$) qui fournit après un nombre (N) d'itérations la convergence de la fonction de récurrence :

$$P_{n+1}(I_{ij}) = \cfrac{1}{1 + \Pi\left[\cfrac{1}{P_n(I_{k\ell})} - 1\right]}$$

où $P_{n+1}(I_{ij})$ est la probabilité d'appartenance d'un pixel ($I_{ij}$) courant à une cible, calculée à une itération d'ordre donné (n+1), où $P_n(I_{k\ell})$ est la probabilité d'appartenance à la même cible de pixels ($I_{k\ell}$) appelés voisins, situés dans un voisinage ($V_{ij}$) du pixel courant incluant ce pixel courant comme centre, calculée à une itération antérieure (n).

L'invention concerne également un dispositif pour mettre en oeuvre cette méthode.

L'invention trouve son application notamment dans le traitement d'images médicales et d'images infrarouges.

Par segmentation binaire, il faut entendre le fait de pouvoir, dans une image ou dans une séquence d'image numérisée, classifier les pixels sur la base de leur niveau de gris, ou d'autres propriétés, dans le but de les étiqueter comme appartenant au fond ou bien à une cible.

Ainsi, à chaque pixel de la matrice de pixels formant une image numérisée, le résultat de la segmentation sera l'affectation de la valeur 0 ou de la valeur 1, zéro correspondant au fond, et 1 aux cibles, ou VICE-VERSA.

La relaxation désigne un ensemble de méthodes de segmentation. La relaxation par la règle du produit est une de ces méthodes de segmentations.

Il est déjà connu de l'état de la technique une méthode de relaxation par la règle du produit, par la publication de Robert L. KIRBY dans "computer graphics and Image processing 13, 158-189 (1980), intitulée "A product Rule Relaxation Method". Cette publication enseigne que la relaxation permet l'estimation des probabilités d'étiqueter les pixels d'une image en utilisant la règle dite du produit pour combiner les probabilités élémentaires de plusieurs pixels. Cette formule correspond à un opérateur de relaxation discret. Des expériences sont décrites concernant l'utilisation de la règle du produit pour étiqueter les pixels d'une image en couleur. Les expériences montrent que dans certaines applications, la règle du produit converge plus rapidement pour les estimations qui permettent des décisions raisonnables que ne le faisaient des formules auparavant connues utilisant des moyennes arithmétiques.

La règle du produit utilisée dans le document cité est fondée sur la relation (2.9) de la page 166, qui donne la probabilité à l'ordre (n+1) en fonction de la probabilité à l'ordre n d'appartenance d'un pixel à une zone plutôt qu'à une autre.

Cette publication enseigne que la relaxation par la règle du produit est un candidat très intéressant parmi les méthodes de relaxation.

Par méthode de relaxation, il faut entendre d'autre part, une méthode itérative. En effet, les méthodes de relaxation s'apparentent aux méthodes de résolution d'équation par des techniques itératives. Ainsi pour arriver au résultat de la relaxation, il doit être fait plusieurs passes : à une image d'entrée est appliquée une première passe de relaxation d'où il résulte une image de sortie ; cette image de sortie devient image d'entrée pour une nouvelle passe de relaxation d'où il résulte une image d'ordre 2. Il faut ainsi itérer l'algorithme N fois, N étant le nombre de passes de relaxation à définir, pour converger vers la solution finale.

Du fait que plusieurs passes sont nécessaires pour obtenir le résultat, les méthodes de relaxation présentent un grave défaut : elles sont très gourmandes en temps de calcul.

D'autre part, du fait qu'elles nécessitent plusieurs passes, il semble a priori qu'elles sont inapplicables à une implémentation en temps réel, à moins de multiplier le matériel nécessaire à l'implémentation, ce qui est un défaut également grave.

Enfin, en ce qui concerne la méthode de relaxation par la règle du produit elle-même, telle que présentée dans la publication citée, rien qu'une seule passe est déjà très gourmande en temps de calcul, car la relation utilisée est très complexe, du fait qu'interviennent de nombreux produits, des sommes, et un quotient.

La méthode proposée dans le document cité, bien qu'intéressante par certains côtés, présente donc par ailleurs de gros désavantages, et semble notamment inapplicable à une implémentation en temps réel.

Selon la présente invention, on montre comment ces difficultés peuvent être contournées et comment une méthode de relaxation par la rgèle du produit peut être implémentée d'une façon simple et en une seule passe de relaxation.

Au moyen du dispositif selon l'invention, on tire avantage d'un algorithme qui converge rapidement, qui est robuste, en particulier face aux conditions d'initialisation, et qui fournit une bonne segmentation.

Selon la présente invention, on montre en outre comment à partir de l'implémentation proposée, on peut définir une généralisation de la règle du produit d'abord utilisée, pour tirer avantage, d'une façon simple, d'algorithmes encore plus robustes.

Selon l'invention, ces buts sont atteints au moyen d'une méthode de segmentation binaire pour délimiter un objet appelé cible du fond dans une image en forme de matrice bidimensionnelle de pixels ($I_{ij}$) numérisés, fondée sur la relaxation par la règle du produit ($\Pi$) qui fournit après un nombre (N) d'itérations la convergence de la fonction de récurrence :

$$P_{n+1}(I_{ij}) = \cfrac{1}{1 + \Pi \left[ \cfrac{1}{P_n(I_{k\ell})} - 1 \right]}$$

où $P_{n+1}(I_{ij})$ est la probabilité d'appartenance d'un pixel ($I_{ij}$) courant à une cible, calculée à une itération d'ordre donné (n+1), où $P_n(I_{k\ell})$ est la probabilité d'appartenance à la même cible de pixels ($I_{k\ell}$) appelés voisins, situés dans un voisinage ($V_{ij}$) du pixel courant incluant ce pixel courant comme centre, calculée à une itération antérieure (n), caractérisée en ce que, pour obtenir la convergence en temps réel, la probabilité d'appartenance [$P_N(I_{ij})$] du pixel courant à la cible fournie par la dernière itération (N) est calculée directement en un seul passage par les opérations de :

détermination A PRIORI d'un nombre fixe (N) d'itérations,
détermination A PRIORI d'une probabilité initiale [$P_0(I_{ij})$] d'appartenance à la cible, affectée à chacun des pixels de l'image indépendamment,
évaluation d'une fonction scalaire (f) de la probabilité initiale, telle que f(x) = Ln[(1/x)-1] où x est ladite probabilité initiale [$P_0(I_{ij})$],
passage d'un filtre (FN) composé dudit nombre fixe (N) de filtres élémentaires linéaires (F) en cascade, chaque filtre élémentaire ayant pour support le voisinage ($V_{ij}$) du pixel courant et pour coefficients la valeur 1 et effectuant une somme ($\Sigma$) des fonctions scalaires evaluées pour lesdits voisins ($I_{k\ell}$) par le filtre élémentaire précédent,
évaluation d'une fonction scalaire (g) du résultat du filtrage telle que g(x) = 1/[1+e(x)] où x est ledit résultat du filtrage par dudit filtre composé (FN), fournissant finalement la probabilité recherchée [$P_N(I_{ij})$].

Dans une mise en oeuvre particulière, cette méthode est caractérisée en ce que la fonction de récurrence de la relaxation par la règle du produit est modifiée pour obtenir un compromis entre vitesse et qualité de convergence, telle que :

$$P_{n+1}(I_{ij}) = \cfrac{1}{1 + \Pi \left[ \left( \cfrac{1}{P_n(I_{k\ell})} - 1 \right)^{q_{k\ell}} \right]}$$

où $q_{k\ell}$ est une puissance qui dépend de la position du voisin ($I_{k\ell}$) considéré dans le facteur du produit (n) vis-à-vis du centre ($I_{ij}$) du voisinage ($V_{ij}$),
et en ce que, dans le filtre (FN), chaque filtre élémentaire (F) a pour support le voisinage ($V_{ij}$) du pixel courant ($I_{ij}$) et pour coefficients des poids affectés à chaque voisin ($I_{k\ell}$) dans le voisinage ($V_{ij}$).

Dans une autre mise en oeuvre, cette méthode est caractérisée en ce que le calcul direct en un seul passage de la probabilité finale [$P_N(I_{ij})$] recherchée comprend :

la détermination d'une fonction d'initialisation ($f_0$) telle que $f_0$ = G . $P_0(I_{ij})$ où G est le niveau de gris maximal de l'image,
l'évaluation de la fonction scalaire (f) de la probabilité initiale de manière telle que f(x) = Ln[(G/x)-1] où x est ladite fonction d'initialisation ($f_0$),
et l'évaluation de la fonction scalaire (g) du résultat du filtrage telle que g(x) = G/[1+e(x)] où x estledit résultat du filtre (FN).

Dans une mise en oeuvre, cette méthode est caractérisée en ce que le calcul direct en un seul passage de la probabilité finale [$P_N(I_{ij})$] recherchée comprend les opérations de :

détermination d'un paramètre (a) définissant A PRIORI un pourcentage de pixels appartenant au fond de l'image, détermination d'un niveau de gris appelé seuil ($S_0$) tel que le nombre de pixels de l'image ayant un niveau de gris inférieur à ce seuil corresponde audit paramètre dans le cas d'un fond sombre,

détermination de la fonction d'initialisation comme une fonction linéaire par morceaux $f_0 = G \cdot P_0(I_{ij})$, où $P_0(I_{ij})$ est la probabilité initiale d'appartenance d'un pixel ($I_{ij}$) à une cible et où G est le niveau de gris maximal de l'image, fonction ($f_0$) qui transforme linéairement les niveaux de gris de l'image d'entrée compris entre 0 et ledit seuil ($S_0$) en des niveaux de gris compris entre 0 et G/2, et qui transforme linéairement en outre les niveaux de gris de l'image d'entrée compris entre ledit seuil ($S_0$) et G en des niveaux de gris compris entre G/2 et G.

Cette méthode peut être mise en oeuvre par un dispositif comprenant couplés en chaîne :

A) un circuit mémoire contenant une première table de codage correspondant à la composition de la première fonction scalaire f(x) et de la fonction d'initialisation $f_0 = G \cdot P_0(I_{ij})$ telle que : $f(x) = Ln[(G/x)-1]$ où $x = f_0$,

B) un filtre linéaire (FN) qui est la composition de N filtres linéaires élémentaires en cascade ayant pour support le voisinage ($V_{ij}$) du pixel courant ($I_{ij}$) et pour coefficients 1 ou des poids affectés respectivement aux pixels dudit voisinage,

C) un circuit mémoire contenant une table de codage constante correspondant à la fonction scalaire $g(x) = G/(1+e^{(x)})$, où x est le résultat du filtrage précédent,

D) un circuit de sélection pour effectuer un seuillage (S) sur la sortie de la seconde table de codage.

L'invention est décrite ci-après en détail, en référence avec les figures annexées parmi lesquelles :

- la figure 1 qui représente la fonction d'initialisation dans une mise en oeuvre de l'invention ;
- la figure 2 qui représente la chaîne de traitement d'une itération de l'algorithme de relaxation ;
- la figure 3 qui représente la chaîne de traitement de N itérations successives de l'algorithme de relaxation ;
- la figure 4 qui représente la chaîne de traitement complète pour réaliser le dispositif de segmentation.

La méthode de relaxation par la règle du produit repose sur trois opérations. On va exposer ci-après ce que sont ces trois opérations et comment on réalise leur implémentation selon l'invention.

On désigne par (Iij) une image à segmenter. Cette notation matricielle résulte du fait que le problème technique à résoudre est le traitement en temps réel d'images numériques.

La relaxation consiste à relier une opération d'initialisation, une opération d'itération, et une opération de seuillage.

L'opération d'initialisation consiste à appliquer une fonction d'initialisation $f_0$ indépendamment sur chaque pixel $I_{ij}$, de manière à associer à chaque pixel une probabilité initiale $P_0(i,j)$ d'appartenance à une cible.

L'opération d'itération consiste à définir la probabilité $P_{n+1}(I_{ij})$ d'appartenance d'un pixel $I_{ij}$ à une cible, à l'itération d'ordre n+1, à partir de la probabilité $P_n(I_{k\ell})$ à l'iteration d'ordre n, où $I_{k\ell}$ décrit un voisinage $V_{ij}$ du pixel $I_{ij}$, incluant le point central, selon la récurrence (1) :

$$P_{n+1}(I_{ij}) = \frac{\Pi[P_n(I_{k\ell})]}{\Pi[P_n(I_{k\ell})] + \Pi[1-P_n(I_{k\ell})]} \quad (1)$$

où $\Pi$ signifie produit. Cette relation de récurrence (1) se déduit de la formule 2-9 page 166 du document cité au titre d'état de la technique, par une mise en forme mathématique appliquée à la segmentation binaire.

Le calcul de récurrence est arrêté au bout d'un nombre N d'étapes ou itérations, ce nombre N étant à définir. On réalise ensuite l'opération de seuillage du résultat de la dernière itération. Lors de cette opération, on affecte 1 à un pixel au-dessus d'une certaine probabilité, ou bien 0 en dessous de cette probabilité pour l'étiqueter comme appartenant à une cible ou bien au fond respectivement. A l'issue du seuillage, on obtient une image binaire segmentée.

Le dispositif décrit ci-après permet de mettre en oeuvre la segmentation binaire, en temps réel, d'images numérisées par relaxation par la règle du produit selon la récurrence (1).

L'opération d'initialisation peut être menée à bien en choisissant une fonction d'initialisation fo parmi diverses fonctions connues de l'homme du métier.

Cependant on propose ci-après une fonction d'initialisation qui donne de bons résultats, qui ne necessite pas d'être redéfinie à chaque image, et qui peut être implémentée aisément.

L'opération d'initialisation demande une connaissance A PRIORI d'un paramètre relatif à l'image d'entrée. On choisira à cet effet la valeur du paramètre a définissant le pourcentage a % des pixels qui appartiennent A PRIORI au fond dans l'image d'origine. Dans ces conditions, A PRIORI le pourcentage des pixels qui appartiennent aux cibles dans l'image d'origine est $(100-\alpha)\%$.

A partir du paramètre a, le dispositif selon l'invention comprend des moyens pour calculer le niveau de gris So tels que le nombre des pixels ayant un niveau de gris inférieur à $S_0$ corresponde à $\alpha$ % des pixels, et le nombre des pixels ayant un niveau de gris supérieur à $S_0$ corresponde à $(100-\alpha)\%$.

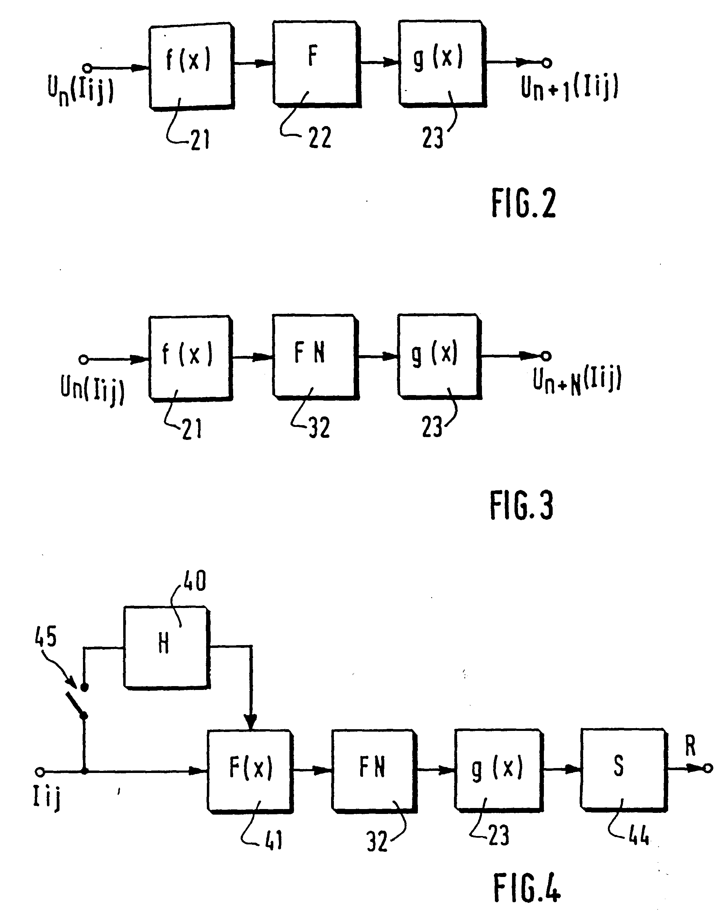

A cet effet, on utilise un circuit mémoire 40, en référence avec la figure 4, qui permet d'effectuer le comptage des pixels correspondant à chaque niveau de gris, et de déterminer, par histogramme noté ci-après H, pour quel niveau de gris le pourcentage $\alpha$ % est atteint. Ce niveau de gris qui fait la coupure entre l'ensemble $\alpha$ % des pixels étiquetés comme appartenant A PRIORI au fond, et l'ensemble $(100-\alpha)\%$ des pixels étiquetés comme appartenant alors aux cibles, est le niveau $S_0$.

C'est d'autre part cet histogramme H que l'on se propose de faire hors temps réel, toutes les 25 images par exemple. Ce choix n'est pas limitatif, car au moyen d'une carte électronique, un histogramme peut être fait toutes les images sans problème dans un système en temps réel. Sur la figure 4, la référence 45 représente l'interrupteur activant le circuit 40 toutes les n = 25 images.

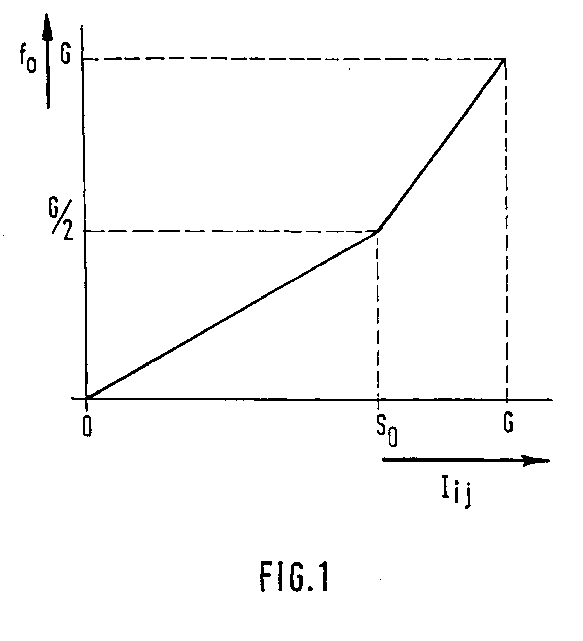

La fonction d'initialisation est ensuite définie en référence avec la figure 1 comme une fonction affine par morceaux :

$$f_0 = G * P_0(I_{ij})$$

où $P_0(I_{ij})$ est la probabilité initiale d'appartenance d'un pixel $I_{ij}$ à une cible et G est le niveau maximal des niveaux de gris : par exemple 256. La fonction d'initialisation $f_0$ transforme linéairement les niveaux de gris de l'image d'entrée compris entre 0 et le seuil So en des niveaux de gris compris entre 0 et G/2. D'autre part cette fonction fo transforme en outre linéairement les niveaux de gris de l'image d'entrée compris entre $S_0$ et G, en des niveaux de gris compris entre G/2 et G.

On notera que la fonction d'initialisation fo résulte en fait en des compressions ou dilatations linéaires de l'échelle de l'histogramme, de telle sorte qu'en sortie de cette fonction, le fond occupe la moitié de la dynamique et les cibles en occupent l'autre moitié.

Sur le graphique de la figure 1, qui comporte en abscisse l'échelle des niveaux de gris en entrée, et en ordonnée l'échelle des niveaux de gris en sortie de la fonction d'initialisation $f_0$, le paramètre G apparaît comme un paramètre de normalisation. En effet, dans un système en temps réel, il est souvent impossible de travailler avec des données flottantes. Ici, une probabilité $P_0$ comprise entre 0 et 1 est multipliée par le facteur G, de manière à travailler avec des entiers compris entre 0 et G, par exemple entre 0 et 256.

Il en résulte que l'image de probabilité obtenue ressemble à une image de niveaux de gris, c'est-à-dire à l'image originale, à certaines dilatations ou compressions près.

Donc l'initialisation consiste à appliquer une fonction scalaire sur l'image de probabilité originale $P_0(I_{ij})$. Cette opération peut être implémentée par une table de codage (L.U.T. : de l'anglais Look-Up-Table) rafraîchie à la fréquence du calcul d'histogramme.

A l'issue de l'opération d'initialisation, on réalise l'opération d'itération. Considérant la relation de récurrence (1), en divisant le numérateur et le dénominateur par $\Pi(P_n(I_{k\ell}))$, on obtient la relation de récurrence (3) :

$$P_{n+1}(I_{ij}) = \cfrac{1}{1 + \Pi\left[\cfrac{1}{P_n(I_{k\ell})} - 1\right]} \quad (3)$$

où $\Pi$ signifie produit et où $I_{k\ell}$ décrit un voisinage $V_{ij}$ de $I_{ij}$ incluant le point central.

Cette division est toujours possible en pratique, du fait que l'on travaille en temps réel sur des valeurs entières, et que l'on n'a donc pas de valeurs infinies. Le cas de la division par 0 est géré par simple extrapolation ou plus simplement en limitant l'intervalle des probabilités possibles à [1, G-1].

On examine en premier le cas d'une seule itération, par exemple celle qui permet de passer de $P_n$ à $P_{n+1}$. Il apparaît d'abord impossible de réaliser un dispositif capable d'effectuer un produit sur plusieurs pixels d'un voisinage comme il est requis dans la règle du produit connue de la relation (3).

Cependant, en utilisant les fonctions logarithmes népérien (Ln) et exponentiel (e) pour transformer le calcul des produits ($\Pi$) en calculs de somme ($\Sigma$) et en posant :

$$U_n(I_{k\ell}) = G. \; P_n(I_{k\ell}) = x \tag{4}$$

qui est l'image des probabilités normalisées, et en posant :

$$f(x) = Ln \; (\frac{G}{x} - 1) \tag{6}$$

on peut alors écrire la relation de récurrence (3) sous la forme (3bis) :

$$P_{n+1}(I_{ij}) = \frac{1}{1 + \Pi \; (\frac{1}{x} - 1)} \tag{3bis}$$

d'où il vient que :

$$U_{n+1}(I_{ij}) = \frac{G}{1 + e^{\left[\Sigma \; Ln \; (\frac{G}{x} - 1)\right]}}$$

ou bien :

$$U_{n+1}(I_{ij}) = \frac{G}{1 + e^{\left[\Sigma \; f(x)\right]}} \tag{7}$$

ce qui amène à poser :

$$g(x) = \frac{G}{1 + e(x)} \tag{8}$$

avec

$$e(x) = e^{\left[\Sigma f(x)\right]}$$

On réalisera donc l'itération de $P_n$ à $P_{n+1}$, en appliquant la fonction f(x) (6) sur l'image $U_n(I_{ij})$.

Cette opération consiste à appliquer une fonction scalaire, f(x), sur chaque pixel. On notera qu'une telle fonction scalaire est réalisable par une table de codage.

En référence avec la relation (7), qui est maintenant la forme de la règle du produit utilisée pour mettre en oeuvre l'invention, il faut réaliser ce qui correspondait au produit $\Pi$ dans la relation (3bis) et qui est dorénavant une somme $\Sigma$ sur l'image logarithme $L_n(\frac{G}{x} - 1)$. Cette opération de sommation est réalisée par l'utilisation d'un filtre F, dont la taille du support correspond à l'étendue du voisinage $V_{ij}$ défini précédemment, et dont tous les coefficients valent 1. Au moyen d'un tel filtre, on peut réaliser l'addition de tous les voisins.

Puis, en référence avec la relation (7), il faut réaliser l'opération inverse qui consiste à obtenir le produit en utilisant l'exponentiel (e) et à reproduire un quotient. A cet effet, on utilise la fonction g(x) (8) contenant l'exponentiel e(x). La fonction g(x) est elle-même une fonction scalaire, pouvant s'appliquer sur la sortie du filtre F, et pouvant être implémentée par une table de codage.

Le filtre linéaire F, et les tables de codage f(x) et g(x) sont des éléments utilisables en temps réel.

Donc, une itération de la récurrence (1) peut s'implanter par la chaîne représentée sur la figure 2, où f(x) et g(x) sont des tables de codage contenues dans des circuits mémoires respectivement 21 et 23 et où F est un filtre linéaire 22 dont tous les coefficients valent 1, et dont la taille du support correspond à l'étendue du voisinage $V_{ij}$,

On a ainsi les moyens pour implémenter une itération en temps réel. Alors que la règle du produit connue était, A PRIORI, une règle non linéaire, faisant intervenir de nombreux produits, travaillant en outre sur un voisinage, et qu'elle n'était donc pas une règle scalaire, les moyens de l'invention comprennent seulement, pour une itération, une opération scalaire non linéaire f(x), un filtre linéaire F, et une seconde opération scalaire non linéaire g(x).

A ce stade, on notera que les fonctions f(x) et g(x) vérifient une propriété intéressante : l'opération de composition de ces fonctions :

$$f(x) \circ g(x) = \text{Identité}$$

Les fonctions f(x) et g(x) sont inverses l'une de l'autre pour l'opération de composition.

Il en résulte que, pour réaliser maintenant un nombre N d'itérations, en utilisant pour chaque itération la chaîne représentée sur la figure 2, il apparaît qu'il est nécessaire de réaliser après chaque opération g(x), une opération f(x) et que ces deux opérations s'annulent.

Donc, après N itérations, seuls restent à réaliser : la fonction f(x), un nombre N de filtres F en cascade, et la fonction g(x). Cela revient à dire que N itérations successives peuvent être réalisées par la composition de la fonction f(x), d'un filtre FN et de la fonction g(x) selon la chaîne représentée sur la figure 3.

Le filtre FN est un filtre linéaire 32 qui est la puissance Nième du filtre F par l'opération de convolution. Son support et ses coefficients sont fonction du nombre N d'itérations. En fixant A PRIORI le paramètre N, le filtre FN peut être calculé également A PRIORI.

L'implémentation de la chaîne de la figure 3 peut donc être réalisée par une table de codage correspondant à la fonction f(x) contenue par exemple dans un circuit mémoire 21, le filtre FN 32 et une table de codage correspondant à la fonction g(x) contenue par exemple dans le circuit mémoire 23.

Enfin le seuillage S est choisi fixe et correspondant à la probabilité 1/2.

L'implémentation de toute la chaîne comprenant l'initialisation, l'itération et le seuillage se fait alors comme il est décrit ci-après.

Cette chaîne comprend d'abord la composition de la fonction scalaire fo appliquée sur l'image d'entrée, et de la fonction scalaire f(x) contenant le logarithme (Ln).

Le dispositif de segmentation comprend donc d'abord un circuit mémoire 41 contenant une première table de codage correspondant à la composition de la fonction f(x) et de la fonction d'initialisation fo, rafraîchie avec la fréquence à laquelle on rafraîchit la fonction d'initialisation par le calcul d'histogramme H, c'est-à-dire par exemple toutes les 25 images. Cette table de codage correspond à la fonction :

$$F(x) = f(x) \circ f_0 \tag{11}$$

Ce dispositif comprend en outre un circuit 32 de filtre FN, calculé A PRIORI en fonction d'un nombre N d'itérations fixé A PRIORI.

Ce dispositif comprend ensuite un circuit mémoire 23 contenant une seconde table de codage fixe correspondant à la fonction g(x) qui contient l'exponentiel (e).

Ce dispositif comprend enfin un circuit 44 de sélection pour effectuer le seuillage sur les images normalisées à

$$S = G/2 \tag{12}$$

La relaxation par la règle du produit est donc finalement implémentée selon l'invention par la chaîne de traitement représentée sur la figure 4.

Cette implémentation ne demande donc pas plusieurs passages, comme la règle du produit le laissait présumer, mais seulement un passage. Elle est parfaitement réalisable en temps réel.

Elle ne nécessite que deux circuits-mémoires contenant l'un 41 une table de codage rafraîchie toutes les 25 images par un calcul d'histogramme H sur l'image d'origine ($I_{ij}$), et l'autre 23 une table de codage fixe, respectivement correspondant aux fonctions F(x) et g(x) ; un filtre FN 32 et un circuit de sélection 44. Il suffit de fixer A PRIORI le pourcentage α % de fond dans l'image d'origine ; et le nombre N d'itérations voulues. On obtient en sortie le résultat R d'image segmentée.

On notera cependant que du fait des sommations réalisées par le filtre FN, la dynamique des tables de codage à une influence sur les performances de l'algorithme. Il sera donc préféré d'utiliser pour les tables de codage des dynamiques au moins de l'ordre de 12 ou 16 bits. De plus, il est notable que, non seulement la dynamique, mais le cadrage des tables de codage est d'importance. L'homme du métier choisira donc ces paramètres en fonction de la précision désirée.

La règle du produit définit un algorithme de relaxation dont la vitesse de convergence est particulièrement élevée, ce qui pourrait être au détriment de la qualité de la segmentation.

L'homme du métier sait bien, en effet qu'il doit toujours établir un compromis entre la vitesse de convergence et la qualité de la convergence.

Une méthode intuitive permettant d'atteindre un compromis entre vitesse de convergence et qualité de segmentation consiste à accorder plus de poids aux probabilités des points centraux dans le voisinage $V_{ij}$, qu'aux probabilités des points périphériques.

De cette façon, en atténuant le poids des voisins les plus périphériques, la vitesse de convergence sera moins grande, mais les chances d'avoir une meilleure qualité de convergence seront supérieures.

Dans l'implémentation proposée selon l'invention, la vitesse de convergence est reflétée par la valeur des coefficients du filtre FN.

Ceci conduit à une nouvelle règle du produit, ci-après dénommée règle du produit étendue, où les termes du produit des éléments d'un voisinage Vij sont pondérés par des puissances fonctions décroissantes de la distance de ces éléments au centre du voisinage considéré.

En effet, en modifiant le poids d'un coefficient du filtre, on ne fait que pondérer les logarithmes par des coefficients multiplicatifs, ce qui correspond à pondérer les probabilités $P_n$ par les exposants correspondants.

On ne devra donc plus considérer :

$$\Pi \left[ \left( \frac{1}{P_n(I_{kl})} - 1 \right) \right]$$

mais

$$\Pi \left[ \left( \frac{1}{P_n(I_{kl})} - 1 \right)^{q_{kl}} \right]$$

la puissance $q_{k\ell}$ à laquelle les probabilités sont élevées dépendant de la localisation dans le voisinage.

On propose donc une nouvelle règle d'itération dans laquelle les produits des $P_n$ à la puissance 1, sont remplacés par les produits des $P_n$ à une certaine puissance, la puissance dépendant de la position de ses voisins par rapport au point considéré. Chaque $P_n$ dans le produit est donc doté d'une puissance.

L'implémentation de la règle du produit étendue se fait en modifiant A PRIORI certains des coefficients du filtre F, donc FN, ce qui ne coûte rien en temps de calcul et ne rend pas l'implémentation plus difficile. Alors que la qualité de la convergence est améliorée, sans que cela se fasse au détriment de la vitesse de convergence comme il était connu de l'homme du métier.

L'implémentation de la chaîne totale proposée selon l'invention a été testée. Elle montre que, en comparaison par exemple avec un algorithme connu sous le non d'algorithme d'Herby, le nombre de cibles détectées est plus grand par le dispositif selon l'invention.

Le dispositif selon l'invention sera utilisé avec profit par exemple pour toutes les images dont l'histogramme a un caractère bimodal, c'est-à-dire par exemple des images médicales (engiographiques, ultrasonores, etc...) ou bien des images I.R.

La règle d'initialisation proposée ici n'est pas absolument indispensable à la mise en oeuvre de l'invention, mais il a été mis en lumière qu'elle était particulièrement bien appropriée. Cependant, si un homme du métier ne disposait pas du matériel nécessaire à la réalisation du calcul d'histogramme et choisissait une autre règle d'initialisation, il pourrait néanmoins arriver à une image segmentée selon l'invention.

**Revendications**

1. Méthode de segmentation binaire pour délimiter un objet appelé cible du fond dans une image en forme de matrice bidimensionnelle de pixels ($I_{ij}$) numérisés, fondée sur la relaxation par la règle du produit ($\Pi$) qui fournit après un nombre (N) d'itérations la convergence de la fonction de récurrence :

$$P_{n+1}(I_{ij}) = \frac{1}{1 + \Pi \left[ \dfrac{1}{P_n(I_{k\ell})} - 1 \right]}$$

où $P_{n+1}(I_{ij})$ est la probabilité d'appartenance d'un pixel ($I_{ij}$) courant à une cible, calculée à une itération d'ordre donné $(n+1)$, où $P_n(I_{k\ell})$ est la probabilité d'appartenance à la même cible de pixels ($I_{k\ell}$) appelés voisins, situés dans un voisinage ($V_{ij}$) du pixel courant incluant ce pixel courant comme centre, calculée à une itération antérieure $(n)$, caractérisée en ce que, pour obtenir la convergence en temps réel, la probabilité d'appartenance $[P_N(I_{ij})]$ du pixel courant à la cible fournie par la dernière itération $(N)$ est calculée directement en un seul passage par les opérations de :

détermination A PRIORI d'un nombre fixe $(N)$ d'itérations,
détermination A PRIORI d'une probabilité initiale $[P_0(I_{ij})]$ d'appartenance à la cible, affectée à chacun des pixels de l'image indépendamment,
évaluation d'une fonction scalaire $(f)$ de la probabilité initiale, telle que $f(x) = Ln[(1/x)-1]$ où x est ladite probabilité initiale $[P_0(I_{ij})]$,
passage d'un filtre $(FN)$ composé dudit nombre fixe $(N)$ de filtres élémentaires linéaires $(F)$ en cascade, chaque filtre élémentaire ayant pour support le voisinage $(V_{ij})$ du pixel courant et pour coefficients la valeur 1 et effectuant une somme $(\Sigma)$ des fonctions scalaires evaluées pour lesdits voisins ($I_{k\ell}$) par le filtre élémentaire précédent,
évaluation d'une fonction scalaire $(g)$ du résultat du filtrage par dudit filtre composé telle que $g(x) = 1/[1+e(x)]$ où x est ledit résultat du filtrage $(FN)$, fournissant finalement la probabilité recherchée $[P_N(I_{ij})]$.

2. Méthode selon la revendication 1, caractérisée en ce que le filtre $(FN)$ est la puissance Nième pour l'opération de convolution du filtre linéaire élémentaire $(F)$.

3. Méthode selon l'une des revendications 1 ou 2, caractérisée en ce que la fonction de récurrence de la relaxation par la règle du produit est modifiée pour obtenir un compromis entre vitesse et qualité de convergence, telle que :

$$P_{n+1}(I_{ij}) = \frac{1}{1 + \Pi \left[ \left( \dfrac{1}{P_n(I_{k\ell})} - 1 \right)^{q_{kl}} \right]}$$

où $q_{k\ell}$ est une puissance qui dépend de la position du voisin ($I_{k\ell}$) considéré dans le facteur du produit $(\Pi)$ vis-à-vis du centre ($I_{ij}$) du voisinage ($V_{ij}$),
et en ce que, dans le filtre $(FN)$, chaque filtre élémentaire $(F)$ a pour support le voisinage $(V_{ij})$ du pixel courant ($I_{ij}$) et pour coefficients des poids affectés à chaque voisin ($I_{k\ell}$) dans le voisinage ($V_{ij}$).

4. Méthode selon la revendication 3, caractérisée en ce que les poids pour former les coefficients du filtre élémentaire $(F)$ ne sont pas uniformément 1 et sont d'autant plus grands qu'ils sont affectés à des pixels ($I_{k\ell}$) du voisinage plus proches du centre ($I_{ij}$) dudit voisinage.

5. Méthode selon l'une des revendications 1 à 4, caractérisée en ce que le calcul direct en un seul passage de la probabilité finale $[P_N(I_{ij})]$ recherchée comprend :

la détermination d'une fonction d'initialisation $(f_0)$ telle que $f_0 = G \cdot P_0(I_{ij})$ où G est le niveau de gris maximal de l'image,
l'évaluation de la fonction scalaire $(f)$ de la probabilité initiale de manière telle que $f(x) = Ln[(G/x)-1]$ où x est ladite fonction d'initialisation $(f_0)$,
et l'évaluation de la fonction scalaire $(g)$ du résultat du filtrage telle que $g(x) = G/[1+e(x)]$ où x est ledit résultat du filtrage $(FN)$.

**6.** Méthode selon la revendication 5, caractérisée en ce que le calcul direct en un seul passage de la probabilité finale [$P_N(I_{ij})$] recherchée comprend les opérations de :

détermination d'un paramètre (a) définissant A PRIORI un pourcentage de pixels appartenant au fond de l'image,

détermination d'un niveau de gris appelé seuil ($S_0$) tel que le nombre de pixels de l'image ayant un niveau de gris inférieur à ce seuil corresponde audit paramètre dans le cas d'un fond sombre,

détermination de la fonction d'initialisation comme une fonction linéaire par morceaux $f_0 = G \cdot P_0(I_{ij})$, où $P_0(I_{ij})$ est la probabilité initiale d'appartenance d'un pixel ($I_{ij}$) à une cible et où G est le niveau de gris maximal de l'image, fonction ($f_0$) qui transforme linéairement les niveaux de gris de l'image d'entrée compris entre 0 et ledit seuil ($S_0$) en des niveaux de gris compris entre 0 et G/2, et qui transforme linéairement en outre les niveaux de gris de l'image d'entrée compris entre ledit seuil ($S_0$) et G en des niveaux de gris compris entre G/2 et G.

**7.** Méthode selon l'une des revendications 1 à 6, caractérisée en ce qu'elle comprend en outre une opération de:

sélection, pour affecter la valeur 1 aux pixels ($I_{ij}$) pour lesquels la probabilité finale calculée [$P_N(I_{ij})$] est supérieure à un seuil (S) et la valeur 0 aux pixels pour lesquels la probabilité finale calculée est inférieure audit seuil.

**8.** Dispositif de segmentation binaire pour mettre en oeuvre en temps réel une méthode selon l'une des revendications 5 à 7, comprenant couplés en chaîne :

A) un circuit mémoire contenant une première table de codage correspondant à la composition de la première fonction scalaire f(x) et de la fonction d'initialisation $f_0 = G \cdot P_0(I_{ij})$ telle que : $f(x) = Ln[(G/x)-1]$ où x $f_0$,

B) un filtre linéaire (FN) qui est la composition de N filtres linéaires élémentaires en cascade ayant pour support le voisinage ($V_{ij}$) du pixel courant ($I_{ij}$) et pour coefficients 1 ou des poids affectés respectivement aux pixels dudit voisinage,

C) un circuit mémoire contenant une table de codage constante correspondant à la fonction scalaire g(x) = G/(1+e(x)), où x est le résultat du filtrage précédent,

D) un circuit de sélection pour effectuer un seuillage (S) sur la sortie de la seconde table de codage.

**9.** Dispositif selon la revendication 8, caractérisé en ce que la fonction d'initialisation est une fonction linéaire par morceaux $f_0 = G \cdot P_0(I_{ij})$, où $P_0(I_{ij})$ est la probabilité initiale d'appartenance d'un pixel ($I_{ij}$) à une cible et où G est le niveau de gris maximal de l'image, fonction ($f_0$) qui transforme linéairement les niveaux de gris de l'image d'entrée compris entre 0 et ledit seuil ($S_0$) en des niveaux de gris compris entre 0 et G/2, et qui transforme linéairement en outre les niveaux de gris de l'image d'entrée compris entre ledit seuil ($S_0$) et G en des niveaux de gris compris entre G/2 et G, le seuil $S_0$ étant un niveau de gris déterminé à partir d'un paramètre (a) fixé A PRIORI, de manière telle que $\alpha$ % des pixels ont un niveau de gris inférieur à $S_0$ dans l'image d'origine,

et en ce qu'il comprend un circuit effectuant le comptage du nombre des pixels correspondant à chaque niveau de gris, pour déterminer le seuil $S_0$, hors temps réel, par un calcul d'histogramme H à partir du paramètre $\alpha$.

**10.** Dispositif selon la revendication 9, caractérisé en ce que l'image traitée fait partie d'une séquence d'images, et en ce que la première table de codage correspondant à la composition de la première fonction scalaire et de la fonction d'initialisation [f(x) o $f_0$] est rafraîchie toutes les n images dans la séquence par ce calcul d'histogramme, n étant un paramètre de fonctionnement déterminé A PRIORI, par exemple n = 25.

**11.** Dispositif selon l'une des revendications 8 à 10, caractérisé en ce que le circuit de sélection effectue un seuillage (S) correspondant à une probabilité 1/2, en affectant la valeur 0 au niveaux de gris des pixels qui sont trouvés au-dessous de la valeur G/2.

**Patentansprüche**

**1.** Binäre Segmentierungsmethode für die Abgrenzung eines Objekts mit der Bezeichnung Hintergrundziel in einem Bild in der Form einer zweidimensionalen Matrix numerischer Pixel ($I_{ij}$), gründend auf der Relaxation nach der Produktregel ($\Pi$), die nach einer Anzahl (N) Iterationen die Konvergenz der Rekursionsfunktion liefert :

$$P_{n+1}(I_{ij}) = \cfrac{1}{1+\pi\left[\cfrac{1}{P_n(I_k)}-1\right]}$$

wobei $P_{n+1}(I_{ij})$ die Wahrscheinlichkeit der Zugehörigkeit eines aktuellen Pixels ($I_{ij}$) zu einem Ziel ist, berechnet nach einer Iteration einer gegebenen Folge (n+1), wobei $P_n(I_{k\ell})$ die Wahrscheinlichkeit der Zugehörigkeit zum selben Ziel von sogenannten benachbarten Pixeln ($I_{k\ell}$) ist, die sich in der Nachbarschaft ($V_{ij}$) des aktuellen Pixels befinden und dieses aktuelle Pixel als Zentrum umschließen, berechnet nach einer vorhergehenden Iteration (n), dadurch gekennzeichnet, daß für den Erhalt der Konvergenz in Echtzeit die Wahrscheinlichkeit der Zugehörigkeit ($P_N(I_{ij})$] des aktuellen Pixels zu dem von der letzten Iteration (N) gelieferten Ziel direkt in einem Durchgang berechnet wird, durch die Operationen der :

Bestimmung A PRIORI einer festen Anzahl (N) Iterationen,
Bestimmung A PRIORI einer initialen Wahrscheinlichkeit [$P_0(I_{ij})$] der Zugehörigkeit zu einem Ziel, jedem der Bildpixel unabhängig zugeordnet,
Bewertung einer Skalarfunktion (f) der initialen Wahrscheinlichkeit wie $f(x)=Ln[(1/x)-1]$, wobei x die besagte initiale Wahrscheinlichkeit [$P_0(I_{ij})$] ist,
Durchgang eines Filters (FN), bestehend aus der festen Anzahl (N) elementarer linearer Filter (F) in Kaskade, wobei jeder elementare Filter als Träger die Nachbarschaft ($V_{ij}$) des aktuellen Pixels und als Koeffizienten den Wert 1 hat und eine Summe ($\Sigma$) der für die besagten Nachbarn ($I_{k\ell}$) durch den vorhergehenden elementaren Filter bewerteten Skalarfunktionen bildet,
Bewertung einer Skalarfunktion (g) des Ergebnisses der Filterung wie $g(x)=1/[1+e(x)]$, wobei x das besagte Ergebnis der Filterung durch den besagten zusammengesetzten Filter (FN) ist, der schließlich die gesuchte Wahrscheinlichkeit [$P_N(I_{ij})$] liefert.

2. Methode nach Anspruch 1, dadurch gekennzeichnet, daß der Filter (FN) die N. Potenz für die Stapeloperation des elementaren linearen Filters (F) ist.

3. Methode nach einem der Ansprüche 1 oder 2, dadurch gekennzeichnet, daß die Rekursionsfunktion der Relaxation nach der Produktregel verändert wird, um einen Kompromiß zwischen Geschwindigkeit und Konvergenzqualität zu erreichen, wie :

$$P_{n+1}(I_{ij}) = \cfrac{1}{1+\pi\left[\left(\cfrac{1}{P_n(I_{kl})}-1\right)^q kl\right]}$$

wobei $q_{k\ell}$ eine Potenz ist, die von der Position des Nachbarn ($I_{k\ell}$) abhängt, beim Faktor des Produkts ($\Pi$) gegenüber dem Zentrum ($I_{ij}$) der Nachbarschaft ($V_{ij}$) betrachtet,
und dadurch, daß der Filter (FN) jedes elementaren Filters (F) als Träger die Nachbarschaft ($V_{ij}$) des aktuellen Pixels ($I_{ij}$) und als Koeffizienten den jedem Nachbarn ($I_{k\ell}$) der Nachbarschaft ($V_{ij}$) zugeteilten Stellenwert hat.

4. Methode nach Anspruch 3, dadurch gekennzeichnet, daß die Stellenwerte zur Bildung der elementaren Filterkoeffizienten (F) nicht einheitlich 1 und umso größer sind, wenn sie Pixeln ($I_{k\ell}$) der näheren Nachbarschaft des Zentrums ($I_{ij}$) der besagten Nachbarschaft zugeteilt werden.

5. Methode nach einem der Ansprüche 1 bis 4, dadurch gekennzeichnet, daß die direkte Berechnung in einem einzigen Durchgang der letztendlicher Wahrscheinlichkeit [$P_N(I_{ij})$] beinhaltet :

die Bestimmung einer Initialisierungsfunktion ($f_0$) wie $f_0=G.P_0(I_{ij})$, wobei G die maximale Grauabstufung des Bild ist,

die Bewertung der Skalarfunktion (f) der initialen Wahrscheinlichkeit, derart, daß $f(x)=Ln[(G/x)-1]$, wobei x die besagte Initialisierungsfunktion ($f_0$) ist,

und die Bewertung der Skalarfunktion (g) des Ergebnisses der Filterung wie $g(x)=G/[1+e(x)]$, wobei x das besagte Ergebnis des Filters (FN) ist.

6. Methode nach Anspruch 5, dadurch gekennzeichnet, daß die direkte Berechnung in einem Durchgang der gesuchten letztendlicher Wahrscheinlichkeit $[P_N(I_{ij})]$ die Operationen beinhaltet der :

Bestimmung eines Parameters ($\alpha$) zur Definition A PRIORI eines zum Bildhintergrund gehörenden Pixelprozentsatzes,

Bestimmung einer Schwelle ($S_0$) bezeichneten Grauabstufung, damit die Anzahl Bildpixel mit einer Grauabstufung unter dieser Schwelle dem besagten Parameter im Falle eines dunklen Hintergrunds entspricht,

Bestimmung der Initialisierungsfunktion wie eine geteilte nicht-lineare Funktion $f_0=G.P_0(I_{ij})$, wobei $P_0(I_{ij})$ die initiale Wahrscheinlichkeit der Zugehörigkeit eines Pixels ($I_{ij}$) zu einem Ziel und wobei G die maximale Grauabstufung des Bildes ist, die Funktion ($f_0$) linear die zwischen 0 und der besagten Schwelle ($S_0$) enthaltenen Grauabstufungen des Eingangsbildes in die zwischen 0 und G/2 enthaltenen Grauabstufungen wandelt und außerdem linear die zwischen der besagten Schwelle ($S_0$) und G enthaltenen Grauabstufungen des Eingangsbildes in die zwischen G/2 und G enthaltenen Grauabstufungen wandelt.

7. Methode nach einem der Ansprüche 1 bis 6, dadurch gekennzeichnet, daß sie außerdem eine Operation enthält zur :

Auswahl zur Zuteilung des Wertes 1 zu den Pixeln ($I_{ij}$), für die die berechnete letztendliche Wahrscheinlichkeit $[P_N(I_{ij})]$ über einer Schwelle (S) liegt, und des Wertes 0 zu den Pixeln, für die die berechnete letztendliche Wahrscheinlichkeit unter der besagten Schwelle liegt.

8. Binäre Segmentieranordnung zur Umsetzung in Echtzeit einer Methode nach einem der Ansprüche 5 bis 7, die in Reihe geschaltet enthält :

A) eine Speicherschaltung mit einer ersten Kodiertabelle entsprechend der Zusammensetzung der ersten Skalarfunktion f(x) und der Initialisierungsfunktion $f_0=G.P_0(I_{ij})$ wie : $f(x)=Ln[(G/x)-1]$, wobei $x=f_0$,

B) einen linearen Filter (FN), der die Zusammensetzung von N elementaren linearen Filtern in Kaskade ist und als Träger die Nachbarschaft ($V_{ij}$) des aktuellen Pixels ($I_{ij}$) und als Koeffizienten 1 oder jeweils den Pixeln der besagten Nachbarschaft zugeteilte Stellenwerte hat,

C) eine Speicherschaltung mit einer konstanten Kodiertabelle entsprechend der Skalarfunktion $g(x)=G/(1+e(x))$, wobei x das Ergebnis der vorhergehenden Filterung ist,

D) eine Auswahlschaltung zur Durchführung einer Schwellenunterteilung (S) am Ausgang der zweiten Kodiertabelle.

9. Anordnung nach Anspruch 8, dadurch gekennzeichnet, daß die Initialisierungsfunktion eine geteilte nicht-lineare Funktion $f_0=G.P_0(I_{ij})$ ist, wobei $P_0(I_{ij})$ die initiale Wahrscheinlichkeit der Zugehörigkeit eines Pixels ($I_{ij}$) zu einem Ziel und wobei G die maximale Grauabstufung des Bildes ist, die Funktion ($f_0$) linear die zwischen 0 und der besagten Schwelle ($S_0$) enthaltenen Grauabstufungen des Eingangsbildes in die zwischen 0 und G/2 enthaltenen Grauabstufungen wandelt und außerdem linear die zwischen der besagten Schwelle ($S_0$) und G enthaltenen Grauabstufungen des Eingangsbildes in die zwischen G/2 und G enthaltenen Grauabstufungen wandelt, wobei $S_0$ eine A PRIORI anhand eines Parameters ($\alpha$) bestimmte Grauabstufung ist, derart, daß $\alpha$% der Pixel eine Grauabstufung unter $S_0$ im Originalbild haben,

und dadurch, daß sie eine Schaltung zur Durchführung des Zählens der Anzahl zu jeder Grauabstufung ensprechenden Pixel enthält, um außerhalb der Echtzeit durch eine Histogrammberechnung H ausgehend vom Parameter $\alpha$ die Schwelle $S_0$ zu bestimmen.

10. Anordnung nach Anspruch 9, dadurch gekennzeichnet, daß das verarbeitete Bild Teil einer Bildsequenz ist und daß die erste Kodiertabele der Zusammensetzung der ersten Skalarfunktion entspricht und die Initialisierungsfunktion $[f(x) \circ f_0]$ alle n Bilder in der Sequeenz durch diese Histogrammberechnung aktualisiert wird, wobei n ein A PRIORI bestimmter Funktionsparameter ist, z.B. $n = 25$.

11. Anordnung nach einem der Ansprüche 8 bis 10, dadurch gekennzeichnet, daß die Auswahlschaltung eine einer Wahrscheinlichkeit 1/2 entsprechende Schwellenunterteilung (S) vornimmt, durch die Zuteilung des Wertes 0 zur Grauabstufung der Pixel, die über dem Wert G/2 gefunden werden.

**Claims**

1. A binary segmentation method for defining an object, called target, on the background in an image in the form of a two-dimensional matrix of digitized pixels ($I_{ij}$), based on the product relaxation rule (II) which, after a number (N) of iterations, provides convergence of the recurrence function:

$$P_{n+1}(I_{ij}) = \cfrac{1}{1 + \pi \left[ \cfrac{1}{P_n(I_k)} - 1 \right]}$$

where $P_{n+1}(I_{ij})$ is the probability that a current pixel ($I_{ij}$) belongs to a target, computed with an iteration of a given order (n+1), where $P_n(I_{kl})$ is the probability that so-called neighbouring pixels ($I_{kl}$) belongs to the same target, said neighbouring pixels being situated in a neighbourhood ($V_{ij}$) of the current pixel which has this current pixel as its central point, computed with a previous iteration (n), characterized in that in order to achieve real-time convergence, the probability [$P_N(I_{ij})$] that the current belongs to the target, provided by the last iteration (N), is computed directly in a single pass by the operations of:

determining a priori a fixed number (N) of iterations;
determining a priori an initial probability [$P_O(I_{ij})$] of belonging to the target, assigned independently to each of the pixels of the image;
evaluating a scalar function (f) of the initial probability so that f(x) = Ln[(1/x)-1], where x is said initial probability [$P_O(I_{ij})$];
passing through a filter (FN) composed of said fixed number (N) of linear elementary filters (F), connected in cascade, each elementary filter having the neighbourhood ($V_{ij}$) of the current pixel as its support and the value 1 as its coefficients, and forming a sum ($\Sigma$) of the scalar functions evaluated for said neighbours ($I_{kl}$) by the preceding elementary filter;
evaluating a scalar function (g) of the result of the filtering by said composite filter, so that g(x) = 1/[1+e(x)], where x is said result of the (FN), ultimately supplying the probability [$P_N(I_{ij})$] searched.

2. A method as claimed in Claim 1, characterized in that the filter (FN) is the Nth power for the convolution operation of the elementary linear filter (F).

3. A method as claimed in one of the Claims 1 or 2, characterized in that the recurrence function of the product relaxation rule is modified so as to obtain a compromise between rate and quality of convergence, so that:

$$P_{n+1}(I_{ij}) = \cfrac{1}{1 + \pi \left[ \left( \cfrac{1}{P_n(I_{kl})} - 1 \right)^q kl \right]}$$

where $q_{kl}$ is a power which depends on the position of the neighbour ($I_{kl}$) considered in the factor of the product (II) with respect to the central point ($I_{ij}$) of the neighbourhood ($V_{ij}$);
and in that each elementary filter (F) in the filter (FN) has the neighbourhood ($V_{ij}$) of the current pixel ($I_{ij}$) as its support and the weights assigned to each neighbour ($I_{kl}$) in the neighbourhood ($V_{ij}$) as its coefficients.

4. A method as claimed in Claim 3, characterized in that the weights for forming the coefficients of the elementary filter (F) are not uniformly 1 and are greater as they are assigned to pixels ($I_{kl}$) of the neighbourhood which are situated nearer to the central point ($I_{ij}$) of said neighbourhood.

5. A method as claimed in one of the Claims 1 to 4, characterized in that the direct computation in a single pass of the final probability [$P_N(I_{ij})$] searched includes:

   determining an initializing function ($f_0$) so that $f_0 = G.P_0(I_{ij})$, where G is the maximum grey level of the image; evaluating the scalar function (f) of the initial probability so that $f(x) = Ln[(G/x)-1]$, where x is said initializing function ($f_0$); and evaluating the scalar function (g) of the filtering result so that $g(x) = G/[1 +e(x)]$, where x is said result of the filtering (FN).

6. A method as claimed in Claim 5, characterized in that the direct computation in a single pass of the final probability [$P_N(I_{ij})$] searched includes the operations of:

   determining a parameter (a) which a priori defines a percentage of pixels belonging to the background of the image; determining a so-called grey threshold level (So) so that the number of pixels of the image having a grey level below this threshold corresponds to said parameter in the case of a dark background; determining the initializing function as a piece-wise linear function $f_0=(3.P_0(I_{ij})$, where $P_0(I_{ij})$ is the initial probability that a pixel ($I_{ij}$) belongs to a target and where G is the maximum grey level of the image, which function ($f_0$) linearly transforms the grey levels of the input image between 0 and said threshold (So) into grey levels between 0 and G/2, and also linearly transforms the grey levels of the input image between said threshold ($S_0$) and G into grey levels between G/2 and G.

7. A method as claimed in one of the Claims 1 to 6, characterized in that it also includes the operation of:
   selection in order to assign the value 1 to the pixels ($I_{ij}$) for which the computed final probability [$P_N(I_{ij})$] exceeds a threshold (S) and the value 0 to the pixels for which the computed final probability is below said threshold.

8. A binary segmentation device for real-time execution of a method as claimed in one of the Claims 5 to 7, comprising a chain of:

   A) a memory circuit which contains a first coding table which corresponds to the composition of the first scalar function f(x) and the initializing function $f_0 = G.P_0(I_{ij})$ so that: $f(x) = Ln[(G/x)-1]$, where $x=f_0$; B) a linear filter (FN) which is a cascade-connection of N elementary linear filters having the neighbourhood ($V_{ij}$) of the current pixel ($I_{ij}$) as their support and 1 or the weights assigned to the respective pixels of said neighbourhood as their coefficients; C) a memory circuit which contains a constant coding table which corresponds to the scalar function $g(x) = G/(1 +e(x))$, where x is the result of the preceding filtering operation; D) a selection circuit for performing a thresholding operation (S) on the output of the second coding table.

9. A device as claimed in Claim 8, characterized in that the initializing function is a piece-wise linear function $f_0=G.P_0(I_{ij})$, where $P_0(I_{ij})$ is the initial probability that a pixel ($I_{ij}$) belongs to a target and where G is the maximum grey value of the image, which function ($f_0$) linearly transforms the grey levels of the input image between 0 and said threshold ($S_0$) into grey levels between 0 and G/2, and also linearly transforms the grey levels of input image between said threshold ($S_0$) and G into grey levels between G/2 and G, the threshold $S_0$ being a grey level determined on the basis of a parameter (a) fixed a priori so that a% of the pixels have a grey level below $S_0$ in the source image, and that it comprises a circuit which counts the number of pixels corresponding to each grey level in order to determine the threshold $S_0$, not in real time, by computation of a histogram H on the basis of the parameter $\alpha$.

10. A device as claimed in Claim 9, characterized in that the image treated forms part of a sequence of images and that the first coding table, corresponding to the composition of the first scalar function and the initializing function [$f(x)$o$f_0$], is refreshed every n images in the sequence by said computation of the histogram, n being an operating parameter determined a priori, for example n = 25.

11. A device as claimed in one of the Claims 8 to 10, characterized in that the selection circuit performs a thresholding operation (S) corresponding to a probability 1/2 by assigning the value 0 to the grey levels of pixels found to be below the value G/2.

FIG.1

$$U_n(Iij) \rightarrow \boxed{f(x)}_{21} \rightarrow \boxed{F}_{22} \rightarrow \boxed{g(x)}_{23} \rightarrow U_{n+1}(Iij)$$

## FIG.2

$$U_n(Iij) \rightarrow \boxed{f(x)}_{21} \rightarrow \boxed{FN}_{32} \rightarrow \boxed{g(x)}_{23} \rightarrow U_{n+N}(Iij)$$

## FIG.3

## FIG.4